# EUROPEAN PATENT APPLICATION

(11) **EP 4 131 186 A1**
(43) Date of publication of application: **08.02.2023**
(21) Application number: 22187053.8
(22) Date of filing: 26.07.2022
(51) Int. Cl.: G07C 9/00, G07C 9/22, G07C 9/27, G07C 9/30, G07C 9/38

(54) **MACHINE LEARNING ASSISTED INTENT DETERMINATION USING ACCESS CONTROL INFORMATION**

(30) Priority: 05.08.2021 US 202163203944 P
(71) Applicant: Carrier Corporation, Palm Beach Gardens, FL 33418 (US)
(72) Inventor: SHAIN, Chaim, Palm Beach Gardens, 33418 (US); NOVOZHENETS, Yuri, Pittsford, 14534 (US)
(74) Representative: Dehns

(57) **Abstract**

Systems and methods for machine learning assisted intent determination are disclosed. In some embodiments, a system comprises at least one processor and memory storing instructions executable by the at least one processor, the instructions when executed cause the system to obtain user information, the user information comprising a behavioral information of the user; obtain access control information for the user, the access control information indicating whether the user accessed a controlled area; train, using the obtained user information and access control information, an intent model of a machine learning system, the intent model configured to determine a user intent, the user intent indicting whether the user intends to access the controlled area; and use the trained intent model to determine the user intent based on the obtained user information.

## Description

The invention relates generally to intent determination and, more specifically, to machine learning assisted intent determination using behavioral characteristics and access control information.

Access control systems are generally used to control access to designated areas. Authentication credentials are generally used to grant or deny access to these areas. In traditional access control, user intent may be determined based on presentation of credentials (e.g., badge). However, user intent may be difficult to determine when other forms of authentication are used.

Aspects of the invention relate to methods, apparatuses, and/or systems for machine learning assisted intent determination using behavioral characteristics and access control information (which may also be referred to as control access information or access information).

A first aspect of the invention provides a system for machine learning assisted intent determination. The system comprises at least one processor and memory storing instructions executable by the at least one processor. The instructions when executed cause the system to: obtain user information comprising behavioral information of the user; obtain access control information for the user, the access control information indicating whether the user accessed a controlled area; train, using the obtained user information and access control information, an intent model of a machine learning system, the intent model configured to determine a user intent, the user intent indicting whether the user intends to access the controlled area; and use the trained intent model to determine the user intent based on the obtained user information.

The instructions may cause the system to: receive authentication information of the user; determine whether the user is authorized to access the controlled area; and responsive to a determination that the user is not authorized to access the controlled area, filter the information related to the user from the user information used to train the intent model.

Optionally, the behavioral characteristics comprise one or more of a gait, movement, or motion of one or more body parts of the user.

The user information may include physiological parameters, the physiological parameters including one or more of a body temperature, heart rate, pulse, or breathing parameters, and wherein the physiological parameters are used to train the intent model.

The instructions may cause the system to obtain information related to the controlled area, and wherein the information related to the controlled area is used in training the intent model.

The system may comprise one or more sensors configured to generate output signals related to the user information; and an access control system configured to provide the access control information.

A second aspect of the invention provides a system for intent determination that comprises at least one processor; and memory storing instructions executable by the at least one processor, the instructions when executed cause the system to: obtain user information, the user information comprising a behavioral information of the user; obtain access control information for the user, the access control information indicating whether the user accessed a controlled area; and determine a user intent based on the behavioral information and the access control information for the user, the user intent indicting whether the user intends to access the controlled area.

The instructions may cause the system to grant access to the controlled area responsive to determining that the user intends to access the controlled area.

A third aspect of the present invention provides a method for machine learning assisted intent determination using access control information, the method being implemented in a computing system comprising at least one processor and memory storing instructions, the method comprises: obtaining user information, the user information comprising behavioral information of the user; obtaining access control information for the user, the access control information indicating whether the user accessed a controlled area; training, using the obtained user information and access control information, an intent model of a machine learning system, the intent model configured to determine a user intent, the user intent indicting whether the user intends to access the controlled area.

The method may comprise using the trained intent model to determine the user intent based on the obtained user information.

Various other features and advantages of embodiments of the invention will be apparent through the detailed description of the invention and the drawings attached hereto. It is also to be understood that both the foregoing general description and the following detailed description are examples and not restrictive of the scope of the invention.

The following descriptions of the drawings should not be considered limiting in any way. With reference to the accompanying drawings, like elements are numbered alike:
FIG. 1 shows an example of a system for machine learning assisted intent determination;
FIG. 1-A shows an example of a system for machine learning assisted intent determination;
FIG. 2 shows examples of a training system;
FIG. 3 shows an example of a controlled area;
FIG. 4 shows a flow diagram illustrating an exemplary method for intent determination using access control information; and
FIG. 5 shows an example of a computer system that may be used to implement aspects of the techniques described herein.

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

The present disclosure provides a system 100 for user intent determination using behavioral characteristics of the user. The behavioral characteristics may include user movement characteristics (e.g., gait, coordination, walking speed, number of steps taken, pace, manner, and pattern of walking, or other movement characteristics); motion, position, or orientation of one or more body parts of the user (e.g., gesture, facial expression, eye movement, head position, etc.). In particular, system 100 may be configured to train deep learning models to identify user intent based on the behavioral characteristics. The learning models may use access control information related to the user to learn the behavioral characteristics associated with the intent. In some embodiments, the learning models may be automatically trained (unsupervised learning) to determine user's intent using verified actions by the user in a particular setting. For example, system 100 may use feedback from the access control system about whether a user has accessed a controlled area (e.g., building, or room of a particular of a particular building) to train the learning models to identify that user's intent. In other words, the models are trained to identify (or detect) whether the user intends to access the controlled area using information, from the access control system, that indicate if he actually accessed or did not access the controlled area. In some embodiments, system 100 may be configured to identify user's behaviors that indicate his intent. For example, the access control results (person indeed entered or did not enter) may be used as positive or negative affirmation of implied intent which over time allows the models to learn what behavioral characteristics (e.g., gait/movement translates to intent). These behaviors may include gesture, motion, gait, expression, movement, or other conscious or unconscious behaviors that indicate the user's intent.

In some embodiments, sensor data from one or more sensors (e.g., optical sensors) may be used to determine information about the user's behavior and information about the scene (setting or environment of the user and the controlled area). In some embodiments, the trained intent models may be scene specific (e.g., the scene may be a front door of the building with surrounding area), user specific, access point specific, or individualized in any other individualization the system administration requires.

The intent learning models of system 100 may be configured to dynamically adapt and adjust to different settings by continuously iterating and self-learning and without having to go through supervised learning (which may be time consuming and costly). In some embodiments, the intent learning models may be individualized to a specific scene but can dynamically adjust to changes in the scene. For example, a behavior that indicate a user's intent in a first setting (e.g., front door of a building) may be different than the behavior that indicates intent in a second setting (e.g., a hallway). Similarly, the intent learning models may adjust to different conditions in the same setting (e.g., crowd, obstruction, time of the day, etc.) Further, the intent learning model may adjust to different conditions of the user (e.g., physical changes, physiological changes, etc.)

This may be beneficial, because the models are constantly self-learning and do not need to be retrained (e.g., each time there is a new user, or each time the access door changes, etc.). Additionally, the disclosed methods do not require large training sets (e.g., specific to each scene, each access point, each controlled area, each user, each change in the scene or user, etc.) That said, not all embodiments may necessarily provide all of these benefits, and some embodiments may provide other distinct advantages, which is not to suggest that any other feature described herein may not also be omitted in some embodiments. For example, operations of system 100 may be used to provide seamless experience for the user (the intent is determined before the user reaches the access point and quicker access may be granted). Other advantages may include that users don't need to "teach" the system to recognize their intent, the learning is done automatically.

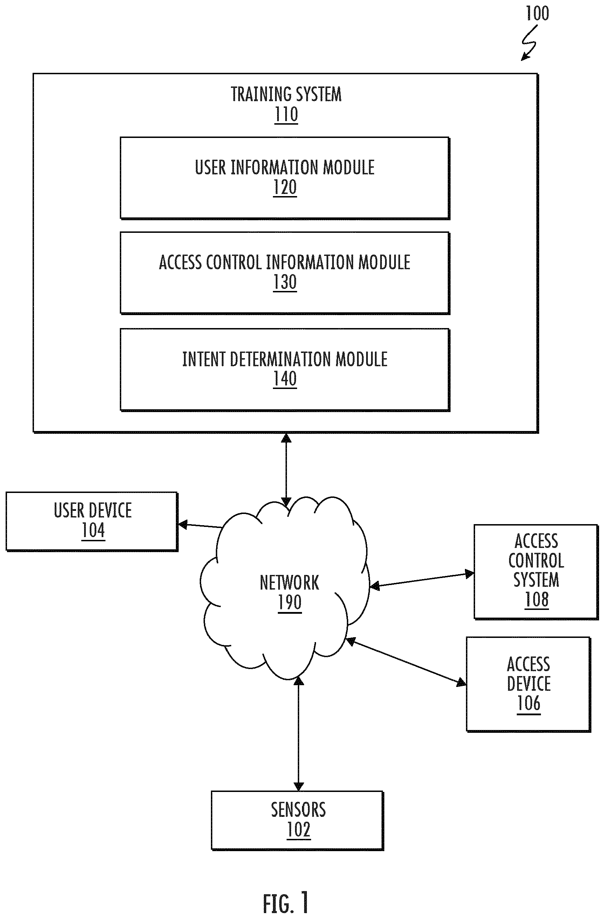

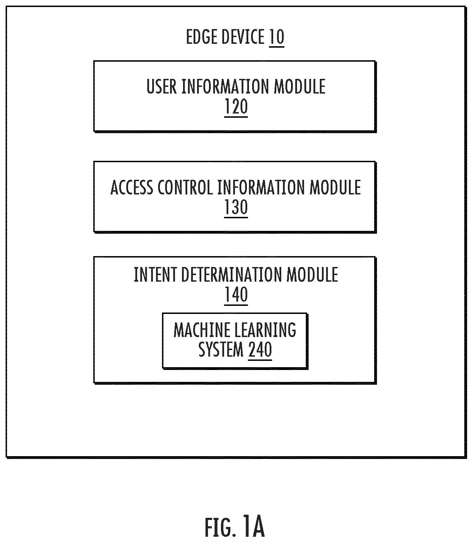

FIG. 1 shows an example of a system 100 for intent determination, in accordance with one or more embodiments. In some embodiments, system 100 may include a training system 110, one or more sensors 102, a user device 104, an access control device 106, an access control system 108, and/or other components. Other components known to one of ordinary skill in the art may be included in system 100 to gather, process, transmit, receive, acquire, and provide information used in conjunction with the disclosed embodiments. In addition, system 100 may further include other components that perform or assist in the performance of one or more processes that are consistent with disclosed embodiments. For example, one or more embodiments described herein may be implemented in an edge device configured for providing control of data flow between networks. FIG. 1-A shows an example of an edge device 10 configured for performing one or more embodiments of the present disclosure. The edge device may be configured to perform or assist in the performance of one or more embodiments described herein (e.g., receive, process, store, or transmit information used in conjunction with the disclosed embodiments). The edge device may include other components (e.g., one or more components of system 100, or other components) to assist in the performance of the disclosed embodiments.

Sensors 102, in some embodiments, may be configured to generate output signals conveying information related to the user, the controlled area, and/or other sensor information. In some embodiments, sensor information may be used to detect, identify, or authenticate the user. In some embodiments, the sensor information provided by sensors 102 may be used for determining a user intent (e.g., sensors information may be used to train machine learning models to detect the user's intent based on the sensor information). In some embodiments, the information may include behavioral information, physiological information, biometric information, identifying information; information related to the controlled area (e.g., building), or surrounding environment of the controlled area; and/or other information. In some embodiments, sensors 102 may include one or more of an optical sensor, an accelerometer, a location sensor, a global positioning system (GPS) sensor, a position sensor, a pedometer, a motion detector, an audio sensor, or other sensors for providing user related or controlled area information. In some embodiments, sensors 102 may be positioned at any location or locations (within or outside system 100) that allow sensor measurements. For example, sensors 102 may include sensors located at or near access device 106, user device 104, with the user (e.g., the user is in possession of the sensor through a device or the sensor is directly coupled with the user), in a surrounding area of the access device104 or the user (e.g., door, hallway, building, outside a building, etc.), or in other locations.

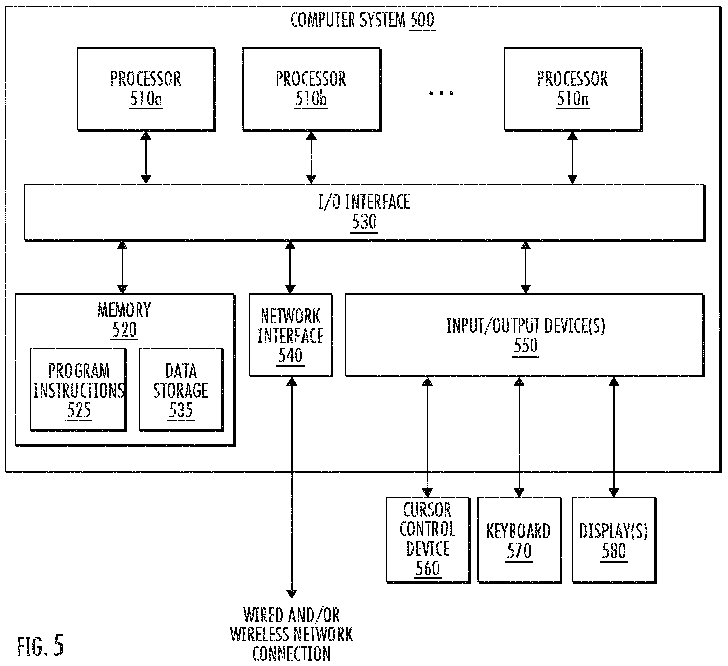

In some embodiments, sensors 102 may include optical sensors configured to generate one or more image data. The image data, in some embodiments, may be used to determine intent of the user. In some embodiments, system 100 may use the image data obtained by the sensors to train the intent models to determine/detect intent of the user. For example, the image data may be used for features or information extraction from data sets received from the optical sensors using a machine learning system (as explained herein below). The optical sensors, in some embodiments, may include one or more of an image or video camera, thermographic sensor, a depth sensor, a scanner, a LIDAR sensor, a RADAR sensor, a 3D camera, an infrared light sensor, a hyperspectral imager, multispectral imager, and/or other sensors. In some embodiments, sensor data obtained from sensors 102 may be processed (e.g., using processors 510 described herein with reference to FIG. 5) to extract image information. In some embodiments, the processors may be included in the sensors. In some embodiments, the sensor data obtained by sensors 102 may include images, videos, multi-dimensional depth images, thermal images, infrared light measurements, light reflection time measurements, radio wave measurements, range, angle, and/or other sensor data. In some embodiments, a plurality of sensor data from a plurality of sensors of sensors 102 may be combined to extract the information. For example, images from different locations and angles, multi-dimensional depth images, thermal images, ranges, angles, and/or other image data obtained from sensors 102 may be combined to provide information about the user and/or the controlled area. In some embodiments, computer vision techniques may be used to extract information about the user or the controlled area from the optical sensors. In some embodiments, computer vision may be used for people or object detection, recognition, or identification.

In some embodiments, information generated by sensors 102 may include behavioral characteristics of the user. The behavioral characteristics of the user may include user movement characteristics (e.g., gait, coordination, walking speed, number of steps taken, pace, manner, and pattern of walking, or other movement characteristics). In some embodiments, the behavioral characteristics may include motion, position, or orientation of one or more body parts of the user (e.g., gesture, facial expression, eye movement, head position, etc.). In some embodiments, information generated by sensors 102 may include physiological information (or parameters). In some embodiments, the physiological parameters may be used to determine the user intent. For example, the physiological parameters may include body temperature, heart rate, pulse, breathing parameters (e.g., respiration rate, inhalation/exhalation duration, breathing cycles, or other breathing parameters), or other physiological parameters.

In some embodiments, information generated by sensors 102 may include biometric information of the user. The biometric information may include physical characteristics (or attributes) of the user (e.g., height, hair, eye, body shape, gender, race, age, body marks, facial, voice characteristics, fingerprints, or other biometric characteristics.) In some embodiments, information generated by sensors 102 may include identification information. The identification information may include, username, ID, access credentials, access levels, passwords, codes, etc. In some embodiments, the biometric information or the identifying information may be used to detect, identify, recognize, or authenticate the user. In some embodiments, the biometric information or the identifying information may be obtained from access control device 106 or access control system 108 described herein. In some embodiments, information generated by sensors 102 may include information related to the scene (e.g., the controlled area and surrounding environment of the controlled area). In formation related to the scene may include size, shape, dimension of the controlled area; number and location of access points; other existing structures or obstacles in the surrounding area; walkways; roads; nature features (trees, etc.); or other physical information related to the controlled area and its surrounding environment.

It should be appreciated that examples of sensors types and operations described herein are to be taken as examples of embodiments for illustration purposes only. Other types of sensors and techniques of sensor information extraction are contemplated and consistent within the present disclosure.

Access control device 106, in some embodiments, may be configured to control access to an area or an asset (e.g., a structure, a building, a room, a compartment, a vehicle, a box, a device, a machine, or other areas or assets to which access is controlled). In some embodiments, access control device 106 may include a locking mechanism that is capable of locking, fastening and/or controlling access (e.g., to a controlled asset or controlled area). In some embodiments, access control device 106 may include mechanical or electrical components. In some embodiments, access control device 106 may be configured to receive signals from and transfer signals to one or more components of system 100. In some embodiments, access control device 106 may authenticate the user or the user device 104. In some embodiments, access control device 106 may include an authentication program (or application) configured to authenticate the user (or user device 104) via multi-factor authentication, proximity authentication, passwords, exchange of keys, pairing, registration, biometrics, forming a private link, or other forms of authentication. Although access control device 106 is depicted in FIG. 1 as a single device, in some embodiments, access control device 106 may include a plurality of interconnected devices capable of performing the functions discussed herein. In some embodiments, access control device 106 may be configured to request and/or verify digital certificate information, decrypt/encrypt information, and or other types of information processing operations. In some embodiments, access control device 106 may include computing resources such as processors and memory devices for storing instructions (e.g., computing system 500 described herein below with reference to FIG. 5). The processors may be configured to execute software instructions to perform various operations consistent with one or more embodiments of the present disclosure.

In some embodiments, access control device 106 may include one or more sensors 102 (described herein). For example, access control device 106 may include one or more of an optical sensor, an RFID reader, a biometric reader, a proximity sensor, motion sensor, and/or other sensors. In some embodiments, access control device 106 may be configured to provide or all of the processing capabilities to the one or more sensors. In some embodiments, access control device 106 may be configured to communicate sensor data to training system 110, access control system 108, or other to other components of system 100.

In some embodiments, access control system 108 may be configured to provide administration functions to control access device 106 (e.g., controlling, programming, monitoring, authenticating, exchanging information, etc.). In some embodiments, access control system 108 may be configured to store access control information related to the user (e.g., access credentials, identification, or authentication information for the user). In some embodiments, the access control information may include information related to access events. For example, the access events information may include details about events when the user accessed or tried to access a controlled area (e.g., time, credentials used, access granted/denied, etc.) In some embodiments, access control system 108 may be configured to communicate the access control information to one or more components of system 100. For example, access control system 108 may provide access events information to training system 110 to train the machine learning models using the events where the user accessed the controlled area (as described herein). In some embodiments, may include one or more processors, memory, databases, or other components, known to one of ordinary skill in the art, to gather, process, transmit, receive, acquire, and provide information used in conjunction with the disclosed embodiments.

User device 104 may include any device capable of communicating user authentication credentials to access control device 106. In some embodiments, user device 104 may be configured to communicate with access control device 106 through short-range wireless communication technologies. For example, user device 104 may be any user device having capabilities to communicate with the access control device 106 (e.g., mobile phone, a wearable computing device, a tablet, etc.). In some embodiments, user device 104 may be a keycard configured to communicate user authentication credentials to access control device 106. In some embodiments, the keycard may be a contact card (e.g., magnetic stripe card, barcode, swipe card, or a contact smart card), or a contactless card capable of communication through short-range wireless communications. In some embodiments, user device 104 may be configured to communicate with access control device 106 or other components of system 100 using one or more short range communications technologies (e.g., RFID, NFC, BLE, BTLE, Wi-Fi, Ultra-wideband (UWB), or other short-range communications technologies).

In some embodiments, user device 104 may include one or more sensors 102 (described herein). For example, user device 104 may include one or more of an accelerometer, a pedometer, a location sensor, GPS, proximity, motion, and/or other sensors. In some embodiments, user device 104 may be configured to provide or all of the processing capabilities to the one or more sensors. In some embodiments, user device 104 may be configured to communicate sensor data to training system 110, access control device 106, access control system 108, or other to other components of system 100. For example, responsive to the user device 104 being in proximity of access control device 106 (or in the environment of the access control device), a short-range communication may be established between the user device and one or more components of system 100 to allow for communicating sensor data, or other communication (e.g., authentication).

Training system 110, in some embodiments, may include a user information module 120, an access control information module 130, an intent determination module 140, and/or other components. In some embodiments, training system 110 may include computing resources such as processors and memory devices for storing instructions (e.g., computing system 500 described herein below with reference to FIG. 5). The processors may be configured to execute software instructions to perform various operations of system 100. The computing resources may include software instructions to perform operations of modules 120, 130, 140, and/or other components of systems 110 and 100.

User information module 120 may be configured to obtain (or determine) information related to the user. As discussed above, the user information may include behavioral information, physiological information, biometric information, identifying information, or other user related information. In some embodiments, the user information may be determined from output signals generated by sensors 102. In some embodiments, the user information may be obtained from user device 104, access device 106, access control system 108, or other components within or outside system 100 (e.g., a database).

For example, user information module 120 may be configured to determine behavioral characteristics of the user based on output signals from sensors 102. The behavioral characteristics of the user may include user movement characteristics (e.g., gait, coordination, walking speed, number of steps taken, pace, manner, and pattern of walking, or other movement characteristics); motion, position, or orientation of one or more body parts of the user (e.g., gesture, facial expression, eye movement, head position, etc.); or other behavioral characteristics. In some embodiments, user information module 120 may be configured to extract the users' behavioral characteristics from image data. For example, gait of the user may be determined using image/video analysis techniques. In some embodiments, behavioral characteristics of the user may be determined based on combination of information from multiple sensors 102 (e.g., optical sensor, location sensor, accelerometer, pedometer, etc.). The determined behavioral characteristics may be mapped to access control information related to the user to determine the intent of the user and train the intent models (as explained herein).

In some embodiments, user information module 120 may be configured to determine one or more physiological parameters of the user based on output signals from sensors 102. In some embodiments, the physiological parameters may include body temperature, heart rate, pulse, oximetry, breathing parameters (e.g., respiration rate, inhalation/exhalation duration, breathing cycles, or other breathing parameters), or other physiological parameters. In some embodiments, sensors 102 may comprise one or more sensors that measure such parameters directly (e.g., through fluid communication with the user), or sensors that generate output signals related to the one or more physiological parameters indirectly through measurements from other sensors or other components within or outside system 100 (e.g., motion sensors, accelerometers, optical sensors, audio sensors, and/or other sensors.) The physiological parameters related to the user may be used to determine intent of the user (whether or not they intend to access the controlled area). In some embodiments, the physiological information may be combined with the behavioral characteristics or other user information to determine the intent of the user.

In some embodiments, access control information module 130 may be configured to obtain access control information related to the user. In some embodiments, the access control information may be obtained from access device 106, access control system 108, or from other components within or outside of system 100. In some embodiments, the access control information may include information related to access events. For example, the access events information may include details about events when the user accessed or tried to access a controlled area (e.g., time, credentials used, access granted/denied, etc.) In some embodiments, module 130 may be configured to determine whether the user accessed (entered) the controlled area based on the received access control information. In some embodiments, access control information module 130 may be configured to determine when the user "actually" entered the controlled area based on access events from multiple access points. For example, a user may be determined to have entered the building if the access events for the user include events from the access control device 106 (e.g., at the front of the building) or from another access control device located inside the building (e.g., elevator, floor, garage, office, coffee machine, printer, or other controlled areas or assets inside the building). In some embodiments, in addition to the access control information, module 130 may determine that the user entered the controlled area based on information or events that identify the user inside the building (e.g., data from one or more sensors inside the building that identify the user). Similarly, the access control information module 130 may be configured to determine when the user did not access the controlled area. For example, the access control information module 130 may determine that the user was denied access (e.g., because he doesn't have access or for authentication issues). In some embodiments, the access control information module 130 may determine that the user did not access the controlled area even after successful authentication (e.g., the user is just passing by the access point and does not intend to enter).

In some embodiments, intent determination module 140 may be configured to determine user intent. In some embodiments, the user intent may indicate whether the user intends to access the controlled area. The user intent may be determined based on the behavioral characteristics of the user. For example, the user intent may be determined based on user movement characteristics (e.g., gait, coordination, walking speed, number of steps taken, pace, manner, and pattern of walking, or other movement characteristics). In some embodiments, the user intent may be determined based motion, position, or orientation of one or more body parts of the user (e.g., gesture, facial expression, eye movement, head position, etc.). In some embodiments, the user intent may be determined based on other user information (e.g., user information described above). In some embodiments, the user intent may be determined based on the access control information, the information related the setting, and or other information. In some embodiments, access control information may be used as a feedback (e.g., positive or negative affirmation of implied intent) in the user intent learning process. In some embodiments, intent determination module 140 may be configured to compare access control information with the user information (e.g., behavioral, physiological, or other user information) to determine intent to access the controlled area. For example, intent determination module 140 may determine the behavioral or the physiological characteristics of the user that correspond to his intent to entering the building (e.g., what gait/movement translates to intent to enter that specific restricted area). Similarly, in some embodiments, the intent determination module 140 may determine that the user did not intend to access the controlled area based on the user information or the access control information. The intent determination module 140 may determine the behavioral or physiological characteristics that correspond to the user intent not to enter the controlled area.

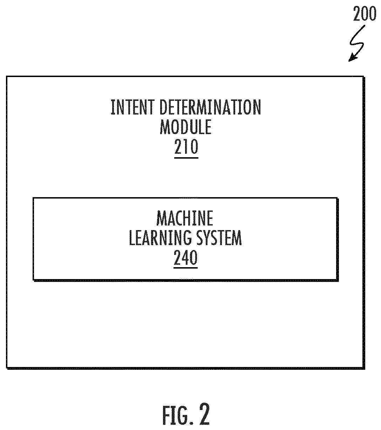

In some embodiments, the user information obtained by user information module 120 and/or access control information obtained by access control information 130 may be input into a machine learning system, of intent determination module 140, configured to train one or more intent models to determine intent of the user. FIG. 2 shows an example operations 200 of a training system, in accordance with one or more embodiments of the present disclosure. In some embodiments, intent determination module 210 may include a machine learning system 240 configured to train one or more intent models to determine intent of the user (e.g., deep learning models). In some embodiments, the machine learning system 240 uses unsupervised learning algorithms to train one or more intent models. In some embodiments, unsupervised learning algorithms of machine learning system 240 may be configured to receive user information and access control information for a particular setting as input. The input data is not labeled, classified, or categorized. In some embodiments, the unsupervised learning algorithms of machine learning system 240 may be configured to identify similarities in the input data and to group new data based on presence or absence of the identified similarities. Using unsupervised learning algorithms may be beneficial because it may allow for discovering hidden trends and patterns, or extracting data features from the input data (e.g., the user information) that would be have been difficult to obtain if techniques were used. For example, the trained intent model may be able to detect micro-gestures or subconscious movements specific to each user that may indicate intent of the user (to enter or not enter).

It is to be understood that the machine learning systems are described here as examples for techniques for determining user intent. However, other techniques, are also contemplated by the present disclosure. As such, any computer implemented techniques, or machine learning techniques for determining user intent based on access control information are contemplated by the present disclosure. For example, machine learning system 240 may implement any type of machine learning technique to determine the user intent as described herein. Machine learning system 240 may use one or more of supervised learning, semi-supervised, unsupervised learning, reinforcement learning, and/or other machine learning techniques). In some embodiments, the machine learning models may include decision trees, support vector machines, regression analysis, Bayesian networks, random forest learning, dimensionality reduction algorithms, boosting algorithms, artificial neural networks (e.g., fully connected neural networks, deep convolutional neural networks, or recurrent neural networks), deep learning, and/or other machine learning models.

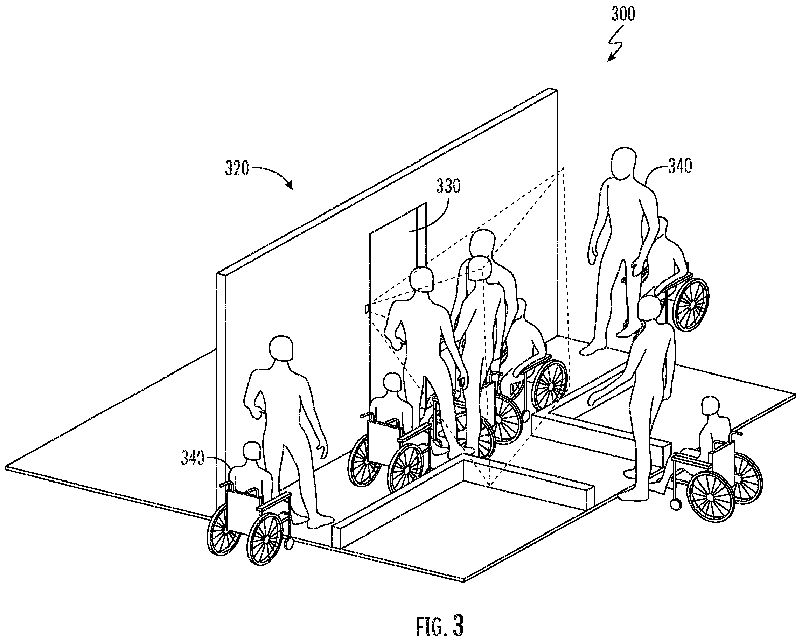

In some embodiments, the intent determination module 140 may be configured to use information related to the specific scene in determining the user intent. In some embodiments, the information related to scene may be used to train the machine learning models to determine the user intent (when the user is in that particular scene). In some embodiments, intent determination module may use size, shape, dimension of the building; number and location of access points; other existing structures or obstacles in the surrounding area; walkways; roads; nature features (trees, etc.); or other physical information related to the controlled area and its surrounding environment in determining the intent (or teaching the intent models). In some embodiments, the intent determination module 140 may be configured to determine intent based on the access point (e.g., specific to a door among multiple doors in the front building). In some embodiments, the intent determination may be based on the angle of approach (or location, position, or orientation) from which the user approaches the access point. One or more of these techniques may apply to the example shown in FIG. 3. FIG. 3 shows an example of a scene 300 according to one or more embodiments. Scene 300 includes a controlled area 320, an access point 330, and users 340. As can be seen from FIG. 3, multiple users are approaching from multiple sides (or angles) of the access point. The intent determination module, as explained above, may be configured to determine the intent of one or more of the users 340 based on information related to the users 340, access control information for users 340, information related to scene 300, access point 330, angle of approach, or other user or controlled area (scene) information.

Returning to FIG. 1, in some embodiments, the intent learning models of system 100 may be configured to dynamically adapt and adjust to different settings by continuously iterating and self-learning and without having to go through supervised learning (which may be time consuming and costly). In some embodiments, the intent learning models may be individualized to a specific scene but can dynamically adjust to changes in the scene. For example, a behavior that indicate a user's intent in a first setting (e.g., front door of a building) may be different than the behavior that indicate intent in a second setting (e.g., a hallway). Similarly, the intent learning models may adjust to different conditions in the same setting (e.g., crowd, obstruction, time of the day, etc.) Further, the intent learning model may adjust to different conditions of the user (e.g., physical changes, physiological changes, etc.) This may be beneficial, because the models are constantly self-learning and do not need to be retrained (e.g., each time there is a new user, or each time the access door changes, etc.). That said, not all embodiments necessarily provide all of these benefits, and some embodiments may provide other distinct advantages, which is not to suggest that any other feature described herein may not also be omitted in some embodiments. For example, operations of system 100 may be used to provide seamless experience for the user (the intent is determined before the user reaches the access point and quicker access may be granted). Other advantages may include that users don't need to "teach" the system to recognize their intent, the learning is done automatically.

In some embodiments, user information module 120 may be configured to detect, identify, or recognize the user based on the user information obtained from sensors 102 (e.g., based on the biometric information or the identifying information). In some embodiments, user information module 120 may be configured to authenticate the user based on the user information obtained from sensors 102 or information from other components of system 100 (e.g., user device 104, access control device 106, access control system 108, and/or other components). In some embodiments, intent determination module 140 may be configured to determine user intent after the user has been authenticated successfully. In some embodiments, user information and access control information used to train the machine learning models are related to users who were authenticated first. In some embodiments, intent determination module 140 may be configured to discard (or filter out) data related to a user who is not authenticated, failed the authentication step, or who doesn't have access to the particular access point from the data used in the machine learning system. In some embodiments, this may provide for a more accurate intent determination training. In some embodiments, multiple users may be detected in the proximity of the controlled area. In these cases, the intent determination module may use a filtering step to remove the users who are not authenticated and use the user information from the users who are authenticated (have access to the controlled area) to train the intent model.

In some embodiments, one or more components of system 100 may communicate directly through one or more dedicated communication links. In some embodiments system 100 may include a network 190 connecting one or more components of system 100. In some embodiments, network 190 may be any type of network configured to provide communications between components of system 100. For example, network may be any type of wired or wireless network (including infrastructure) that provides communications, exchanges information, and/or facilitates the exchange of information, such as the Internet, near field communication (NFC), optical code scanner, cellular network, a public switched telephone network ("PSTN"), text messaging systems (e.g., SMS, MMS), frequency (RF) link, Bluetooth^{®}, Wi-Fi, a private data network, a virtual private network, a Wi-Fi network, a LAN or WAN network, or other suitable connections that enables the sending and receiving of information between the components of system 100. It will be appreciated that this is not intended to be limiting and that the scope of this disclosure includes implementations in which the client one or more components of system 100 are operatively linked via some other communication media.

It should be appreciated that the illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium.

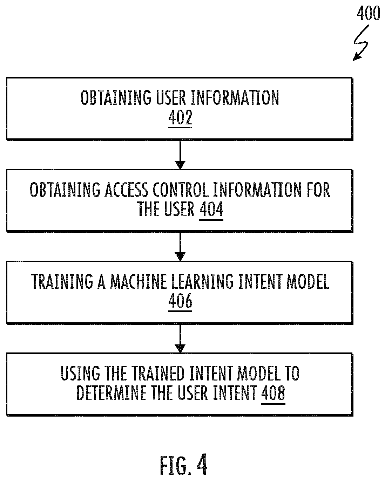

FIG. 4 shows a flow diagram illustrating an exemplary method 400 for intent determination using access control information, in accordance with one or more embodiments of the present disclosure. The operations of method 400 presented below are intended to be illustrative. In some implementations, method 400 may be accomplished with one or more additional operations not described and/or without one or more of the operations discussed. Additionally, the order in which the operations of method 400 are illustrated in FIG. 4 and described below is not intended to be limiting.

In some embodiments, the methods may be implemented in one or more processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on an electronic storage medium. The processing devices may include one or more devices configured through hardware, firmware, and/or software to be specifically designed for execution of one or more of the operations of the method.

At an operation 402 of method 400, user information of the user may be obtained. In some embodiments, the user information may comprise behavioral information of the user. In some embodiments, operation 402 may be performed by user information module, the same as or similar to user information module 120 (shown in FIG. 1 and described herein).

At an operation 404 of method 400, access control information for the user may be obtained. In some embodiments, the access control information may indicate whether the user accessed a controlled area. In some embodiments, operation 404 may be performed by an access control information module, the same as or similar to access control information module 130 (shown in FIG. 1 and described herein).

At an operation 406 of method 400, an intent learning model of a machine learning system may be trained using the obtained user information and access control information. In some embodiments, the intent model may be configured to determine a user intent indicting whether the user intends to access the controlled area. In some embodiments, operation 406 may be performed by an intent determination module, the same as or similar to intent determination module 140 (shown in FIG. 1 and described herein).

At operation 408 of method 400, the trained intent model may be used to determine the user intent based on the obtained user information. In some embodiments, operation 408 may be performed by an intent determination module, the same as or similar to intent determination module 140 (shown in FIG. 1 and described herein).

Embodiments of one or more techniques of the present disclosure as described herein may be executed on one or more computer systems, which may interact with various other devices. One such computer system is illustrated by FIG. 5. FIG. 5 shows an example of a computer system that may be used to implement aspects of the techniques described herein. In different embodiments, computer system 500 may include any combination of hardware or software that can perform the indicated functions, including, but not limited to, a computer, personal computer system, desktop computer, laptop, notebook, or netbook computer, mainframe computer system, handheld computer, workstation, network computer, a camera, a set top box, a mobile device, network device, internet appliance, PDA, wireless phones, pagers, a consumer device, video game console, handheld video game device, application server, storage device, a peripheral device such as a switch, modem, router, or other type of computing or electronic device.

In the illustrated embodiment, computer system 500 includes one or more processors 510 coupled to a system memory 520 via an input/output (I/O) interface 530. Computer system 500 further includes a network interface 540 coupled to I/O interface 530, and one or more input/output devices 550, such as cursor control device 560, keyboard 570, and display(s) 580. In some embodiments, it is contemplated that embodiments may be implemented using a single instance of computer system 500, while in other embodiments multiple such systems, or multiple nodes making up computer system 500, may be configured to host different portions or instances of embodiments. For example, in one embodiment some elements may be implemented via one or more nodes of computer system 500 that are distinct from those nodes implementing other elements.

In various embodiments, computer system 500 may be a uniprocessor system including one processor 510, or a multiprocessor system including several processors 510 (e.g., two, four, eight, or another suitable number). Processors 510 may be any suitable processor capable of executing instructions. may be comprised of semiconductor(s) and/or transistors (e.g., electronic integrated circuits (ICs)). In such a context, processor-executable instructions may be electronically executable instructions. For example, in various embodiments, processors 510 may be general-purpose or embedded processors implementing any of a variety of instruction set architectures (ISAs), such as the x86, PowerPC, SPARC, or MIPS ISAs, or any other suitable ISA. In multiprocessor systems, each of processors 510 may commonly, but not necessarily, implement the same ISA.

In some embodiments, at least one processor 510 may be a graphics processing unit. A graphics processing unit or GPU may be considered a dedicated graphics-rendering device for a personal computer, workstation, game console or other computing or electronic device. Modern GPUs may be very efficient at manipulating and displaying computer graphics, and their highly parallel structure may make them more effective than typical CPUs for a range of complex graphical algorithms. For example, a graphics processor may implement a number of graphics primitive operations in a way that makes executing them much faster than drawing directly to the screen with a host central processing unit (CPU). In various embodiments, the image processing methods disclosed herein may, at least in part, be implemented by program instructions configured for execution on one of, or parallel execution on two or more of, such GPUs. The GPU(s) may implement one or more application programmer interfaces (APIs) that permit programmers to invoke the functionality of the GPU(s). Suitable GPUs may be commercially available from vendors such as NVIDIA Corporation, ATI Technologies (AMD), and others. In some embodiments, one or more computers may include multiple processors operating in parallel. A processor may be a central processing unit (CPU) or a special-purpose computing device, such as graphical processing unit (GPU), an integrated circuit or on-chip system, an application-specific integrated circuit (ASIC), a field-programmable gate array (FPGA), a complex programmable logic device (CPLD), or application-specific integrated circuits.

System memory 520 may be configured to store program instructions and/or data accessible by processor 510. In various embodiments, system memory 520 may be implemented using any suitable memory technology, such as static random-access memory (SRAM), synchronous dynamic RAM (SDRAM), nonvolatile/Flash-type memory, or any other type of memory. In the illustrated embodiment, program instructions and data implementing desired functions, such as those described in this disclosure, are shown stored within system memory 520 as program instructions 525 and data storage 535, respectively. In other embodiments, program instructions and/or data may be received, sent or stored upon different types of computer-accessible media or on similar media separate from system memory 520 or computer system 500. Generally speaking, a computer-accessible medium may include storage media or memory media such as magnetic or optical media, e.g., disk or CD/DVD-ROM coupled to computer system 500 via I/O interface 530. Program instructions and data stored via a computer-accessible medium may be transmitted by transmission media or signals such as electrical, electromagnetic, or digital signals, which may be conveyed via a communication medium such as a network and/or a wireless link, such as may be implemented via network interface 540.

In one embodiment, I/O interface 530 may be configured to coordinate I/O traffic between processor 510, system memory 520, and any peripheral devices in the device, including network interface 540 or other peripheral interfaces, such as input/output devices 550. In some embodiments, I/O interface 530 may perform any necessary protocol, timing or other data transformations to convert data signals from one component (e.g., system memory 520) into a format suitable for use by another component (e.g., processor 510). In some embodiments, I/O interface 530 may include support for devices attached through various types of peripheral buses, such as a variant of the Peripheral Component Interconnect (PCI) bus standard or the Universal Serial Bus (USB) standard, for example. In some embodiments, the function of I/O interface 530 may be split into two or more separate components, such as a north bridge and a south bridge, for example. In addition, in some embodiments some or all of the functionality of I/O interface 530, such as an interface to system memory 520, may be incorporated directly into processor 510.

Network interface 540 may be configured to allow data to be exchanged between computer system 500 and other devices attached to a network, such as other computer systems, or between nodes of computer system 500. In various embodiments, network interface 540 may support communication via wired or wireless general data networks, such as any suitable type of Ethernet network, for example, via telecommunications/telephony networks such as analog voice networks or digital fiber communications networks; via storage area networks such as Fibre Channel SANs, or via any other suitable type of network and/or protocol.

Input/output devices 550 may, in some embodiments, include one or more display terminals, cursor control devices (e.g., mouse), keyboards, keypads, touchpads, touchscreens, scanning devices, voice or optical recognition devices, or any other devices suitable for entering or retrieving data by one or more computer system 500. Multiple input/output devices 550 may be present in computer system 500 or may be distributed on various nodes of computer system 500. In some embodiments, similar input/output devices may be separate from computer system 500 and may interact with one or more nodes of computer system 500 through a wired or wireless connection, such as over network interface 540.

Those skilled in the art will appreciate that computer system 500 is merely illustrative and is not intended to limit the scope of the present disclosure. In particular, computer system 500 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

It should be understood that the description and the drawings are not intended to limit the invention to the particular form disclosed, but to the contrary, the intention is to cover all modifications, equivalents, and alternatives falling within the spirit and scope of the present invention as defined by the appended claims. Further modifications and alternative embodiments of various aspects of the invention will be apparent to those skilled in the art in view of this description. Accordingly, this description and the drawings are to be construed as illustrative only and are for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed or omitted, and certain features of the invention may be utilized independently, all as would be apparent to one skilled in the art after having the benefit of this description of the invention. Changes may be made in the elements described herein without departing from the spirit and scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof.

Therefore, it is intended that the present invention not be limited to the particular embodiment disclosed as the best mode contemplated for carrying out this present disclosure, but that the present invention will include all embodiments falling within the scope of the claims.

## Claims

1. A system for intent determination, the system comprising:
at least one processor; and
memory storing instructions executable by the at least one processor, the instructions when executed cause the system to:
obtain user information, the user information comprising behavioral information of the user;
obtain access control information for the user, the access control information indicating whether the user accessed a controlled area;
train, using the obtained user information and access control information, an intent model of a machine learning system, the intent model configured to determine a user intent, the user intent indicting whether the user intends to access the controlled area; and
use the trained intent model to determine the user intent based on the obtained user information.

2. The system of claim 1, wherein the instructions when executed cause the system to:
receive authentication information of the user;
determine whether the user is authorized to access the controlled area; and
responsive to a determination that the user is not authorized to access the controlled area, filter the information related to the user from the user information used to train the intent model.

3. The system of claim 1 or 2, wherein the behavioral characteristics comprise one or more of a gait, movement, or motion of one or more body parts of the user.

4. The system of any preceding claim, wherein the user information comprises physiological parameters, the physiological parameters comprising one or more of a body temperature, heart rate, pulse, or breathing parameters, and wherein the physiological parameters are used to train the intent model.

5. The system of any preceding claim, wherein the instructions when executed cause the system to:
obtain information related to the controlled area, and wherein the information related to the controlled area is used in training the intent model.

6. The system of any preceding claim, further comprising:
one or more sensors configured to generate output signals related to the user information; and
an access control system configured to provide the access control information.

7. A system for intent determination, the system comprising:
at least one processor; and
memory storing instructions executable by the at least one processor, the instructions when executed cause the system to:
obtain user information, the user information comprising a behavioral information of the user;
obtain access control information for the user, the access control information indicating whether the user accessed a controlled area; and
determine a user intent based on the behavioral information and the access control information for the user, the user intent indicting whether the user intends to access the controlled area.

8. The system of claim 7, wherein the instructions when executed cause the system to:
grant access to the controlled area responsive to determining that the user intends to access the controlled area.

9. A method for machine learning assisted intent determination, the method being implemented in a computing system comprising at least one processor and memory storing instructions, the method comprising:
obtaining user information, the user information comprising behavioral information of the user;
obtaining access control information for the user, the access control information indicating whether the user accessed a controlled area; and
training, using the obtained user information and access control information, an intent model of a machine learning system, the intent model configured to determine a user intent, the user intent indicting whether the user intends to access the controlled area.

10. The method of claim 9, further comprising:
using the trained intent model to determine the user intent based on the obtained user information.

11. The method of claim 9 or 10, further comprising:
receiving authentication information of the user;
determining whether the user is authorized to access the controlled area; and
responsive to a determination that the user is not authorized to access the controlled area, filtering the information related to the user from the user information used to train the intent model.

12. The method of claim 9, 10 or 11, wherein the behavioral characteristics comprise one or more of a gait, movement, or motion of one or more body parts of the user.

13. The method of any of claims 9 to 12, wherein the user information includes physiological parameters, the physiological parameters including one or more of a body temperature, heart rate, pulse, or breathing parameters, and wherein the physiological parameters are used to train the intent model.

14. The method of any of claims 9 to 13, further comprising:
obtaining information related to the controlled area, and wherein the information related to the controlled area is used in training the intent model.

15. The method of any of claims 9 to 14, further comprising:
granting access to the controlled area responsive to determining that the user intends to access the controlled area.
